# EUROPEAN PATENT SPECIFICATION

(11) **EP 0 605 613 B1**
(45) Date of publication and mention of the grant of the patent: **24.01.1996**
(21) Application number: 92920943.5
(22) Date of filing: 17.09.1992
(51) Int. Cl.: B63B 5/24

(54) **A SANDWICH CONSTRUCTION METHOD FOR BUILDING A VESSEL**
SANDWICH-BAUWEISE FÜR SCHIFFSBAU
PROCEDE DE CONSTRUCTION SANDWICH D'UN NAVIRE

(30) Priority: 27.09.1991 NO 913800
(43) Date of publication of application: 13.07.1994
(73) Proprietor: KVAERNER MANDAL A.S., N-4500 Mandal (NO)
(72) Inventor: JOHNSEN, Kare, Rygg, N-1342 Jar (NO)
(74) Representative: Onn, Thorsten
(86) International application number: NO9200152
(87) International publication number: WO9305998

(56) References cited:
- GB-A- 1 578 534
- US-A- 2 758 321
- US-A- 3 093 847
- US-A- 3 593 354
- US-A- 3 832 745

## Description

The invention relates to a sandwich construction method for building a vessel. The method may be used for constructing vessels of different shapes and sizes.

Other methods for constructing boats are previously known: US Patent 3832745 describes a method wherein a single whole mould is used for constructing the hull. The disadvantage with this method is that the mould has a constant dimension, so that only vessels of the same size can be produced. The preparation of moulds of this kind is expensive and time-consuming, and this method requires therefore the mass production of boats in order to be economically viable. British Patent 1578534 describes a construction method wherein regular, profiled materials are used. US Patent 3593354 describes a sandwich construction with a frame which may be removed. This method is restricted, in the main, to lightweight boats. US Patent 2758321 makes use of a reinforced plastic structure for the hull, and an inner support structure (ribs) which are fixed in the hull during the entire construction process.

The advantages of the method in the present invention in comparison to the aforementioned methods are that the invention provides a more flexible and economically favourable method. In the method in the invention a pre-prepared mould is not used, but the inner support structure of the vessel, which usually consists of longitudinal and transverse ribs, is used as a mould. Thus, there is great flexibility with regard to, for example, the length and shape of the hull. The method is therefore particularly suitable for building vessels in small series.

The method of building vessels which are constructed of an inner structure and a skin, which in this case consists of a core, an outer laminate and an inner laminate, comprises the following steps:
(i) the inner structure is built;
(ii) the core of the skin is placed on the outside of the inner structure;
(iii) the outer laminate is laminated on to the core;
(iv) the core of the skin and the outer laminate are separated from the inner structure;
(v) the inner laminate of the skin is laminated on to the core, and
(vi) the inner structure and the skin are joined.

In a preferred method spacers are positioned on the inner structure, so that when the core of the skin is placed thereon, the distance between said inner structure and the core of the skin will be equal to the thickness of the inner laminate.

In a preferred method the inner structure is divided into sections in such a way that steps (iv) to (vi) take place section by section.

In a preferred method the building of the inner structure, the application of the core of the skin and the lamination of the outer laminate take place whilst the vessel is upside down.

In a preferred method the lamination of the inner laminate takes place when the vessel is positioned keel down.

The invention will be explained in detail with reference to the drawings which illustrate an embodiment of the invention:

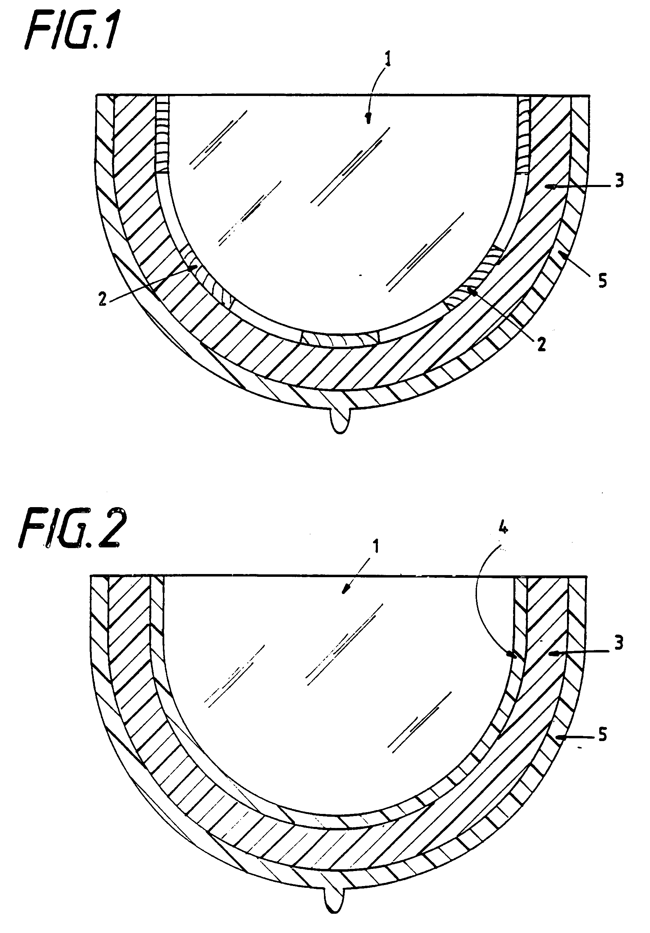

- Figure 1: shows a cross-section of the half finished hull where an outer laminate has been applied to the core material, and also an inner support structure with spacers.
- Figure 2: depicts a cross-section of the completed hull which consists of an inner support structure and a skin comprising a core, an outer laminate and an inner laminate; the inner support structure has been joined to the skin after the removal of the spacers.

In the method according to the invention, the inner support structure is built in that the pre-cut frames (1) are assembled at the correct distance from one another, and in such a way that the hull is preferably built whilst the vessel is upside down. During the moulding of the hull, the inner support structure functions as a mould. In the first moulding phase, spacers (2) are preferably affixed to the inner structure. First a core material (3) is placed on the inner support structure, for example in the form of plates. On the outside of the core material an outer laminate (5) is first applied. The outer laminate may consist of, for example, glass fibre reinforced plastic which is applied in a thickness of from 2 to 5 mm.
When the whole hull has been laminated on the outside it is turned so that the keel faces down. The inner support structure is thereafter removed section by section, the spacers (2) are removed and an inner laminate (4) is applied to the core (3). The thickness of said inner laminate (4), which may consist of, for example, glass fibre reinforced plastic, corresponds to the thickness of the spacers (2).

A skin has now been made consisting of a core material, an outer laminate and an inner laminate. After the spacers have been removed the inner support structure is joined to the skin.

In this way, the inner support structure is now completely complementary to the ready moulded skin. The removal of the inner support structure and the application of the inner laminate section by section continues until the whole boat has been covered.

In the method according to the invention the inner support structure is used both as a mould during the construction of the hull and later as the ribs in the completed vessel.

## Claims

1. A method for building vessels constructed of an inner structure and a skin consisting of a core, an outer laminate and an inner laminate, comprising the following steps:
(i) the inner structure is built;
(ii) the core of the skin is placed on the outside of the inner structure;
(iii) the outer laminate is laminated on to the core;
(iv) the core of the skin and the outer laminate are separated from the inner structure;
(v) the inner laminate of the skin is laminated on to the core, and
(vi) the inner structure and the skin are joined.

2. A method according to claim 1, characterized in that spacers are placed on the inner structure in such a way that when the core of the skin is applied the distance between the the inner structure and the core of the skin will be equal to the thickness of the inner laminate.

3. A method according to claims 1 to 2, characterized in that the inner structure is divided into sections so that steps (iv) to (vi) of the method disclosed in claim 1 take place section by section.

4. A method according to claims 1 to 3, characterized in that the building of the inner structure, the application of the core of the skin and the lamination of the outer laminate take place whilst the vessel is upside down.

5. A method according to claim 4, characterized in that the lamination of the inner laminate takes place whilst the vessel is positioned keel down.

## Patentansprüche

1. Verfahren zum Bau von Schiffen, die aus einer inneren Konstruktion und einer Schale, die sich zusammensetzt aus einem Kern, einem äußeren Laminat und einem inneren Laminat, aufgebaut sind, wobei das Verfahren die folgenden Schritte aufweist:
(i) die innere Konstruktion wird aufgebaut;
(ii) der Kern der Schale wird auf der Außenseite der inneren Konstruktion plaziert;
(iii) das äußere Laminat wird auf den Kern geschichtet;
(iv) der Kern der Schale und das äußere Laminat werden von der inneren Konstruktion getrennt;
(v) das innere Laminat der Schale wird auf den Kern geschichtet, und
(vi) die innere Konstruktion und die Schale werden zusammengesetzt.

2. Verfahren gemäß Anspruch 1, **dadurch gekennzeichnet**, daß Abstandshalter derart auf der inneren Konstruktion plaziert werden, daß, wenn der Kern der Schale aufgebracht wird, der Abstand zwischen der inneren Konstruktion und dem Kern der Schale gleich der Dicke des inneren Laminats sein wird.

3. Verfahren gemäß Anspruch 1 oder 2, **dadurch gekennzeichne**t, daß die innere Konstruktion in Abschnitte unterteilt ist, so daß die Schritte (iv) bis (vi) des in Anspruch 1 offenbarten Verfahrens Abschnitt für Abschnitt stattfinden.

4. Verfahren gemäß einem der Ansprüche 1 bis 3, **dadurch gekennzeichnet**, daß der Aufbau der inneren Konstruktion, das Aufbringen des Kerns der Schale und die Schichtung des äußeren Laminats stattfinden, während das Schiff seine Oberseite nach unten gerichtet hat.

5. Verfahren gemäß Anspruch 4, **dadurch gekennzeichnet**, daß die Schichtung des inneren Laminats stattfindet, während das Schiff sich in einer Position mit Kiel nach unten befindet.

## Revendications

1. Procédé de construction de navires constitués d'une structure interne et d'une peau comprenant une âme, un stratifié externe et un stratifié interne comportant les étapes suivantes :
(i) on réalise la structure interne;
(ii) l'âme de la peau est placée sur l'extérieur de la structure interne;
(iii) le stratifié externe est stratifié sur l'âme;
(iv) l'âme de la peau et le stratifié externe sont séparés de la structure interne;
(v) le stratifié interne de la peau est stratifié sur l'âme et
(vi) la structure interne et la peau sont réunies.

2. Procédé selon la revendication 1, caractérisé en ce que des entretoises sont placées sur la structure interne de manière que, lorsque l'âme de la peau est appliquée, la distance entre la structure interne et l'âme de la peau soit égale à l'épaisseur du stratifié interne.

3. Procédé selon les revendications 1 à 2 caractérisé en ce que la structure interne est divisée en sections afin que les étapes (iv) à (vi) du procédé décrit dans la revendication 1 s'effectuent section par section.

4. Procédé selon les revendications 1 à 3, caractérisé en ce que la réalisation de la structure interne, l'application de l'âme de la peau et la stratification du stratifié externe sont effectuées alors que le navire est en position retournée.

5. Procédé selon la revendication 4 caractérisé en ce que la stratification du stratifié interne est effectuée alors que le navire est positionné avec sa quille vers le bas.
